# EUROPEAN PATENT APPLICATION

(11) **EP 4 785 803 A1**
(43) Date of publication of application: **05.08.2026**
(21) Application number: 24872258.9
(22) Date of filing: 25.09.2024
(51) Int. Cl.: A23D 9/007, A23C 11/04, A23D 9/00

(54) **POWDERY OIL OR FAT CONTAINING YEAST CELL WALLS**

(30) Priority: 28.09.2023 JP 2023167535
(71) Applicant: ASAHI GROUP FOODS, LTD., Tokyo, 130-8602 (JP); Asahi Group Holdings, Ltd., Tokyo 130-8602 (JP)
(72) Inventor: ASANUMA Masaharu, Tokyo 130-8602 (JP); KOIDE Atsushi, Tokyo 130-8602 (JP)
(74) Representative: Hoffmann Eitle
(86) International application number: PCT/JP2024/034135
(87) International publication number: WO 2025/070472

(57) **Abstract**

The present invention provides powdered oil-and-fat containing a yeast cell wall, an emulsifier, and oil-and-fat. The powdered oil-and-fat using a yeast cell wall can maintain a fine emulsified-particle size without using a milk raw material, and thus the powdered oil-and-fat of the present invention can have excellent emulsion stability and also has excellent processing suitability.

## Description

### Technical Field

The present invention relates to powdered oil-and-fat containing yeast cell wall.

### Background Art

Powdered oil-and-fat is easily mixed with water and thus widely used in foods, and generally contains a milk raw material such as a milk protein (for example, casein) for stabilizing emulsion, in addition to an edible oil-and-fat, a carbohydrate, and an emulsifier.

In recent years, to avoid allergens derived from milk and to deal with, e.g., increasing demand for low-fat or non-fat foods due to diet-consciousness and health consciousness, and increasing demand for vegan food, the need to reduce the use of milk raw materials has been increasing. In response to such a need, a variety of alternative foods using plant-derived raw materials such as oat, soybean, and almond have been developed in place of milk raw materials. Other than the plant-derived raw materials, milk-like alternatives derived from yeast materials have also been reported. For example, the present applicant has reported the use of a composition containing a decomposition product of a yeast cell wall, which contains a cell wall lysing enzyme-decomposition product of a residue after production of yeast extract (yeast cell body residue), as a milk-like substitute, an emulsifier, or an emulsion stabilizer (for example, see Patent Literature 1).

### Citation List

### Patent Literature

Patent Literature 1: JP 2022-135934 A

### Summary of Invention

### Technical Problem

However, powdered oil-and-fat using no milk raw material was not stably emulsified and had problems in white turbidity and processing suitability. Accordingly, an object of the present invention is to provide powdered oil-and-fat having excellent emulsion stability without using a milk raw material.

### Solution to Problem

As a result of intensive studies conducted to solve this problem, the inventors found that powdered oil-and-fat (in particular, creaming powder) using a yeast cell wall, an emulsifier, and vegetable oil-and-fat can maintain a fine emulsified-particle size and also has excellent processing suitability without using a milk raw material, and achieved the present invention.

The present invention is as follows.
[1] Powdered oil-and-fat containing a yeast cell wall, an emulsifier, and oil-and-fat.
[2] The powdered oil-and-fat according to [1], wherein the emulsified-particle size (mode diameter) is 1.0 µm or less.
[3] The powdered oil-and-fat according to [1] or [2], further containing a carbohydrate.
[4] The powdered oil-and-fat according to any one of [1] to [3], wherein the emulsifier is at least one selected from the group consisting of polyglycerol fatty acid esters and organic acid monoglycerides.
[5] The powdered oil-and-fat according to any one of [1] to [4], wherein the powdered oil-and-fat is creaming powder.
[6] The powdered oil-and-fat according to any one of [1] to [5], containing no milk raw material.

### Advantageous Effects of Invention

The powdered oil-and-fat according to the present invention uses a yeast cell wall, thereby making it possible to maintain a fine emulsified-particle size. Because of this, the powdered oil-and-fat according to the present invention can have excellent emulsion stability without using a milk raw material, and also has excellent processing suitability.

In Patent Literature 1, an emulsion was prepared using a decomposition product of a yeast cell wall, edible oil-and-fat, corn syrup solid, and water, and its emulsifying ability was evaluated. As a result, formulations using the decomposition product of the yeast cell wall exhibited good emulsion stability (see, e.g., Dosage formulations 1 and 2 of Test Example 1), whereas a formulation using the yeast cell wall (yeast cell body residue) had a problem in emulsion stability (see, e.g., Dosage formulation 4 of Test Example 1). However, in the present invention, not the decomposition product of the yeast cell wall (Comparative Examples 3 to 5) but the yeast cell wall is used in combination with oil-and-fat and an emulsifier (Examples 1 to 5). Owing to this, powdered oil-and-fat having a fine particle size and excellent emulsion stability (see Table 1 of Examples described later) can be obtained.

### Description of Embodiments

In an embodiment of the present invention, there is provided powdered oil-and-fat containing a yeast cell wall, an emulsifier, and oil-and-fat.

The powdered oil-and-fat generally refers to a powder-form product prepared by encapsulating oil-and-fat with, e.g., a carbohydrate or a protein, and having a property of being dispersed as fine oil droplets (emulsified particles) when added to a medium such as water. In the present invention, the "powdered oil-and-fat" refers to a powder-form product prepared by encapsulating oil-and-fat with a yeast cell wall, an emulsifier, and an optional carbohydrate, and dispersed as fine oil droplets (emulsified particles) when added to a medium such as water. The fine oil droplets are preferably oil droplets having an emulsified-particle size (mode diameter) of 1.0 µm or less, and more preferably 0.7 µm or less. When the emulsified-particle size is controlled to fall within such a range, the emulsion stability can be further improved. The method for measuring the emulsified-particle size is not particularly limited, and can be appropriately selected according to the purpose. The emulsified-particle size can be measured by, e.g., a laser diffraction particle size analyzer as described in Examples (described later). The mode diameter refers to a most frequently occurring particle size (most frequent size) in the volume-based particle size distribution.

The "yeast cell wall" used in the present invention is not particularly limited as long as it contains the cell wall of yeast, but typically includes dried yeast or a residue (insoluble fraction) of yeast cell bodies obtained after (dried) yeast is subjected to extraction treatment. The yeast cell wall may be a yeast cell body generated as a residue by subjecting yeast to known extraction treatments such as self-digestion treatment (protease treatment), hot water treatment, acid treatment, alkali treatment, and/or mechanical pulverization treatment, and then removing the supernatant (watersoluble fraction (yeast extract)) separated by centrifugation, etc. The yeast cell wall is preferably a residue (water-insoluble fraction) of the yeast cell bodies obtained after the extraction of yeast with hot water. Note that, the yeast cell wall of the present invention does not include the "decomposition product of a yeast cell wall" of Patent Literature 1, that is, a product obtained by decomposing dried yeast or a residue (insoluble fraction) of yeast cell bodies, which is obtained after subjecting (dried) yeast to an extraction treatment, with a cell-wall lysing enzyme, particularly glucanase.

The yeast cell body residue is constituted of, e.g., proteins, lipids, ash, and dietary fibers. The content rate of the proteins is, for example, from 20 mass% to 60 mass% based on the dry mass of the yeast cell body residue. The content rate of the lipids is, for example, from 1 mass% to 10 mass% based on the dry mass of the yeast cell body residue. The content rate of the ash is, for example, from 0 mass% to 10 mass% based on the dry mass of the yeast cell body residue. The content rate of the dietary fibers is, for example, from 10 mass% to 60 mass% based on the dry mass of the yeast cell body residue. The yeast cell body residue contains, other than the general nutritional components, components reported to have physiological functions, such as β-glucan and α-mannan. β-Glucan is a polysaccharide obtained by polymerization of D-glucose via β-1,3 bond and β-1,6 bond, and is classified as a dietary fiber due to the presence of an indigestible component in food that cannot be digested by human digestive enzymes. α-Mannan is a polysaccharide obtained by polymerization of D-mannose via α-1,6 bond, α-1,2 bond or α-1,3 bond, and is classified as a dietary fiber due to the presence of an indigestible component in food that cannot be digested by human digestive enzymes. The content rate of the β-glucan is, for example, from 10 mass% to 40 mass% based on the dry mass of the yeast cell body residue. The content rate of the α-mannan is, for example, from 10 mass% to 40 mass% based on the dry mass of the yeast cell body residue.

The contents of individual components can be determined by known analytical methods. The content of the proteins can be obtained by measuring an amount of nitrogen thereof, for example, by the Kjeldahl method, and multiplying the amount of nitrogen by a conversion factor of 6.25. The content of the lipids can be determined, for example, by the acid decomposition method. The content of the ash can be determined by the direct ashing method. The content of the dietary fibers can be determined, for example, by the Prosky method (enzyme-gravimetric method) or high-performance liquid chromatography (enzyme-HPLC method). The content of α-mannan can be measured by determining, for example, the amount of mannose produced by hydrolyzing mannan. The content of β-glucan can be measured by, for example, a (1-3),(1-4)-β-glucan assay kit (manufactured by Megazyme Ltd.).

The term "dry mass of the yeast cell body residue" used herein refers to the mass of the yeast cell body residue after it is dried by a known method. The drying method is not particularly limited and any known drying method can be used, such as heat drying under atmospheric pressure, vacuum drying, spray drying and lyophilization. The dry mass can be obtained by drying a sample, for example, by a heat-dryer under atmospheric pressure at 105°C for 5 hours and measuring the residue.

The yeast is not particularly limited as long as it can be applied to the field of foods. Examples of the yeast include brewing yeast, bakery yeast, and sake yeast. Examples of the yeast include, but are not limited to, microbes belonging to the genera *Saccharomyces*, *Saccharomycodes*, *Rhodotorula*, *Endomycopsis*, *Nematospora*, *Brettanomyces*, *Candida*, and *Torulopsis*. Of them, *Saccharomyces cerevisiae*, *Saccharomyces pastorianus*, *Saccharomyces bayanus* and *Candida utilis* are preferable. They may be used alone or in combination of two or more types of them.

The amount of the yeast cell wall contained in the powdered oil-and-fat of the present invention may be, for example, 0.1 to 20 mass%, preferably 1 to 10 mass%, and more preferably 3 to 6 mass%.

The "emulsifier" to be used in the present invention is not particularly limited as long as it is an emulsifier approved for use in food. The emulsifiers may be used alone or in combination of two or more types of them. Preferred examples of the emulsifier include glycerol fatty acid esters. Examples of the glycerol fatty acid ester include monoacylglycerols, diacylglycerols, organic acid monoglycerides, and polyglycerol fatty acid esters. The emulsifier of the present invention is more preferably at least one selected from the group consisting of organic acid monoglycerides and polyglycerol fatty acid esters. Examples of the organic acid monoglyceride include acetic acid monoglyceride and citric acid monoglyceride (Poem (registered trademark) B-30, manufactured by Riken Vitamin Co., Ltd.), succinic acid monoglyceride, diacetyl tartaric acid monoglyceride, and lactic acid monoglyceride. Examples of the polyglycerol fatty acid ester include decaglycerol stearate (Poem (registered trademark) J-0081HV, manufactured by Riken Vitamin Co., Ltd.), decaglycerol laurate, decaglycerol oleate, and decaglycerol myristate (SY Glyster MM-750, manufactured by Sakamoto Yakuhin Kogyo Co., Ltd.).

The amount of the emulsifier contained in the powdered oil-and-fat of the present invention may be, for example, 0.1 to 10 mass%, preferably 0.5 to 5 mass%, and more preferably 1 to 3 mass%.

The "oil-and-fat" used in the present invention is not particularly limited as long as it is oil-and-fat approved for use in food. The oils-and-fats may be used alone or in combination of two or more types of them. Examples of the "oil-and-fat" include, but are not particularly limited to, edible safflower oil, edible grape oil, edible soybean oil, edible sunflower oil, edible corn oil, edible cottonseed oil, sesame oil, edible rapeseed oil, edible rice bran oil, edible peanut oil, edible olive oil, edible palm oil, edible palm olein, edible palm stearin, edible palm kernel oil, edible coconut oil, edible blended oil, flavored edible oil, beef tallow, lard, chicken oil, fish oil, milk fat, hydrogenated oils-and-fats, and oils-and-fats produced by microbes such as yeasts. The oil-and-fat of the present invention is preferably oil-and-fat used in known powdered oil-and-fat, and more preferably a plant-derived oil-and-fat such as edible palm oil, edible palm kernel oil, or edible coconut oil.

The amount of the oil-and-fat contained in the powdered oil-and-fat of the present invention may be, for example, 10 to 60 mass%, preferably 10 to 50 mass%, and more preferably 20 to 40 mass%.

According to an embodiment of the present invention, there is provided powdered oil-and-fat further containing a carbohydrate. The "carbohydrate" to be used in the present invention is not particularly limited as long as it is a carbohydrate approved for use in food. The carbohydrates may be used alone or in combination of two or more types of them. Examples of the carbohydrate include monosaccharides, disaccharides, trisaccharides, tetrasaccharides, sugar alcohols, oligosaccharides, polysaccharides, starch decomposition products, and reduced starch decomposition products. Examples of the carbohydrate of the present invention include ketotriose, aldotriose, erythrulose, ribulose, xylulose, lyxose, deoxyribose, psicose, fructose, sorbose, tagatose, allose, altrose, glucose, mannose, gulose, idose, galactose, talose, fucose, fuculose, rhamnose, sedoheptulose, sucrose, lactose, maltose, trehalose, turanose, cellobiose, raffinose, maltotriose, acarbose, stachyose, fructo-oligosaccharides, galacto-oligosaccharides, mannan-oligosaccharides, glycogen, starch, cellulose, dextrin, corn syrup, corn syrup solid, white soft sugar, and glucan.

The amount of the carbohydrate contained in the powdered oil-and-fat of the present invention may be, for example, 30 to 80 mass%, preferably 40 to 70 mass%, and more preferably 60 to 70 mass%.

The powdered oil-and-fat of the present invention may further contain additives. Examples of the additives include, but are not limited to, an excipient, a lubricant, a binder, a disintegrating agent, a pH adjuster, a solvent, a solubilizing agent, a suspending agent, a buffer, a preservative, an antioxidant, a colorant, a sweetener, and a flavor. As these additives, known additives can be used. The amounts of the additives can be appropriately controlled by those skilled in the art according to the purpose.

The powdered oil-and-fat of the present invention can be produced from these raw materials in the same manner as in the method for producing known powdered oil-and-fat. Typically, these raw materials are mixed in water to prepare an oil-in-water type (O/W type) emulsion by emulsification equipment, and thereafter, the emulsion is spray-dried by, e.g., a spray dryer, to obtain a powder.

For example, as described in Examples (described later), first, a yeast cell wall, an emulsifier, and an optional carbohydrate are dissolved or dispersed in warm water of 60 to 80°C, and if necessary, a buffer solution is further added to dissolve, thereby preparing an aqueous solution. Subsequently, a mixture of oil-and-fat and an emulsifier is added to the aqueous solution and the resulting mixture is mixed until all components are dissolved or dispersed to make an emulsion. Typically, the emulsion is sterilized and homogenized in a subsequent step. The homogenized emulsion is poured into a spray tower and spray-dried to obtain powdered oil-and-fat. The resulting powdered oil-and-fat may preferably have a moisture content of 1 to 3 wt%.

The "powdered oil-and-fat" of the present invention can be applied to various foods and drinks similarly to known powdered oil-and-fat. Examples of these foods and drinks include, but are not limited to, breads, western confectioneries, Japanese confectioneries, kneaded products, noodles, soups, dressings, seasonings, retort foods, oil-and-fat processed products, oil-and-fat preparations, dairy products, and other processed foods. The "powdered oil-and-fat" of the present invention can also be used as creaming powder.

### Examples

Hereinafter, the present invention will be explained in more detail by referring to Examples, but these Examples should not be construed as limiting the scope of the present invention.

### [Preparation Example 1]

Dried yeast (Hyper Yeast HG-DY manufactured by Asahi Group Foods, Ltd.) was extracted with hot water, and a heavy liquid (insoluble fraction) centrifugally obtained was collected and spray-dried to obtain a yeast cell body residue.

### [Preparation Example 2]

A suspension (solid content of 16%) of the yeast cell body residue obtained in Preparation Example 1 was sterilized in an autoclave (121°C for 20 minutes) and 0.5 mass% of glucanase (DENAZYME GEL-L1/R, manufactured by Nagase Viita Co., Ltd.) based on the dry mass of the yeast cell body residue was added in the conditions of 50°C and pH 5.3. The resulting mixture was treated at 50°C for 18 hours. Thereafter, the treated product was heated to 80°C to inactivate glucanase, concentrated up to a concentration of 30 mass%, and spray-dried to obtain a decomposition product of yeast cell wall with enzyme.

### [Examples 1 to 5]

Corn syrup solid (manufactured by Toyo Chemical Co., Ltd.), the yeast cell wall obtained in Preparation Example 1, a polyglycerol fatty acid ester (decaglycerol fatty acid ester (monomyristate) (SY Glyster MM-750, manufactured by Sakamoto Yakuhin Kogyo Co., Ltd.) and/or decaglycerol fatty acid ester (monostearate) (Poem J-0081HV, manufactured by Riken Vitamin Co., Ltd.)) were dissolved in warm water (temperature 60 to 80°C) to prepare an aqueous solution.

Separately, an organic acid monoglyceride (succinic acid monoglyceride (Poem B-30, manufactured by Riken Vitamin Co., Ltd.)) was dissolved in oil-and-fat (vegetable oil-and-fat (hydrogenated coconut oil, manufactured by Fuji Oil Co., Ltd.)) adjusted to 70°C to prepare an oil component. To the obtained oil component, the aqueous solution prepared above was added and mixed to perform pre-emulsification. Subsequently, heat sterilization was performed at 70°C for 10 minutes, and thereafter, homogenization was performed by a pressure homogenizer to obtain an emulsion. Note that, the blend amounts of individual components are as shown in Table 1.

This emulsion was sprayed by a spray dryer according to a conventional method, dried and powdered to obtain powdered oils-and-fats of Examples 1 to 5.

### [Comparative Examples 1 to 5]

Corn syrup solid (manufactured by Toyo Chemical Co., Ltd.), the decomposition product of yeast cell wall with enzyme obtained in Preparation Example 2, a polyglycerol fatty acid ester (decaglycerol fatty acid ester (monomyristate) (SY Glyster MM-750, manufactured by Sakamoto Yakuhin Kogyo Co., Ltd.) and/or decaglycerol fatty acid ester (monostearate) (Poem J-0081HV, manufactured by Riken Vitamin Co., Ltd.)) were dissolved in warm water (temperature 60 to 80°C) to prepare an aqueous solution.

Separately, an organic acid monoglyceride (succinic acid monoglyceride (Poem B-30, manufactured by Riken Vitamin Co., Ltd.)) was dissolved in oil-and-fat (vegetable oil-and-fat (hydrogenated coconut oil, manufactured by Fuji Oil Co., Ltd.)) adjusted to 70°C to prepare an oil component. To the obtained oil component, the aqueous solution prepared above was added and mixed to perform pre-emulsification. Subsequently, heat sterilization was performed at 70°C for 10 minutes, and thereafter, homogenization was performed by a pressure homogenizer to obtain an emulsion. Note that, the blend amounts of individual components are as shown in Table 1.

This emulsion was sprayed by a spray dryer according to a conventional method, dried and powdered to obtain the powdered oils-and-fats of Comparative Examples 1 to 5.

### [Table 1]

**Table 1**

| Raw Material Name | General Name | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|
| Cured coconut oil | Oil-and-fat | 30.00 | 30.00 | 30.00 | 30.00 | 30.00 | 30.00 | 30.00 | 30.00 | 30.00 | 30.00 |
| Corn syrup solid | Carbohydrate | 64.70 | 61.70 | 63.60 | 65.40 | 64.85 | 67.70 | 67.70 | 64.70 | 61.70 | 67.00 |
| Preparation Example 1 | Yeast cell wall | 3.00 | 6.00 | 3.00 | 3.00 | 3.00 | 0.00 | 3.00 | 0.00 | 0.00 | 0.00 |
| Preparation Example 2 | Decomposition product of yeast cell wall with enzyme | 0.00 | 0.00 | 0.00 | 0.00 | 0.00 | 0.00 | 0.00 | 3.00 | 6.00 | 3.00 |
| SY Glyster MM-750 | Emulsifier | 1.20 | 1.20 | 0.00 | 1.20 | 1.20 | 1.20 | 0.00 | 1.20 | 1.20 | 0.00 |
| Poem J-0081HV | Emulsifier | 0.70 | 0.70 | 3.00 | 0.00 | 0.70 | 0.70 | 0.00 | 0.70 | 0.70 | 0.00 |
| Poem B-30 | Emulsifier | 0.40 | 0.40 | 0.40 | 0.40 | 0.25 | 0.40 | 0.00 | 0.40 | 0.40 | 0.00 |
| Total (%) | | 100.00 | 100.00 | 100.00 | 100.00 | 100.00 | 100.00 | 100.00 | 100.00 | 100.00 | 100.00 |

### [Evaluation Example 1: Measurement of Emulsified-particle Size]

The average particle size of the emulsified particles of powdered oil-and-fat was measured using a laser diffraction particle size analyzer (Mastersizer 3000, manufactured by Malvern Panalytical) using a sample prepared by suspending 1 g of each of the powdered oils-and-fats obtained in Examples 1 to 5 and Comparative Examples 1 to 5 in 50 mL of water. The results are shown in Table 2.

**[Table 2]**

| Example | Emulsified-particle size (mode diameter (µm)) | Comparative Example | Emulsified-particle size (mode diameter (µm)) |
|---|---|---|---|
| 1 | 0.566 | 1 | 0.796 |
| 2 | 0.597 | 2 | 14.9 |
| 3 | 0.672 | 3 | 1.74 |
| 4 | 0.618 | 4 | 2.94 |
| 5 | 0.659 | 5 | 9.59 |

### Industrial Applicability

Powdered oil-and-fat using a yeast cell wall can maintain a fine emulsified-particle size (mode diameter: 1.0 µm or less) without using a milk raw material, and thus the powdered oil-and-fat of the present invention has excellent emulsion stability and excellent processing suitability.

## Claims

1. Powdered oil-and-fat comprising a yeast cell wall, an emulsifier, and oil-and-fat.

2. The powdered oil-and-fat according to claim 1, having an emulsified-particle size (mode diameter) of 1.0 µm or less.

3. The powdered oil-and-fat according to claim 1, further comprising a carbohydrate.

4. The powdered oil-and-fat according to claim 1, wherein the emulsifier is at least one selected from the group consisting of a polyglycerol fatty acid ester and an organic acid monoglyceride.

5. The powdered oil-and-fat according to claim 1, wherein the powdered oil-and-fat is creaming powder.

6. The powdered oil-and-fat according to claim 1, comprising no milk raw material.
